# EUROPÄISCHE PATENTSCHRIFT

(11) **EP 3 592 662 B1**
(45) Veröffentlichungstag und Bekanntmachung des Hinweises auf die Patenterteilung: **26.01.2022**
(21) Anmeldenummer: 18731361.4
(22) Anmeldetag: 28.05.2018
(51) Int. Cl.: B65D 81/32, A61C 5/64, A61C 5/66

(54) **ZWEI KOMPONENTEN MISCHKAPSEL, INSBESONDERE FÜR DENTALE ZWECKE**
TWO-COMPONENT MIXING CAPSULE, IN PARTICULAR FOR DENTAL PURPOSES
CAPSULE DE MÉLANGE DE DEUX COMPOSANTS, EN PARTICULIER POUR DES APPLICATIONS DENTAIRES

(30) Priorität: 30.05.2017 DE 102017111725
(43) Veröffentlichungstag der Anmeldung: 15.01.2020
(73) Patentinhaber: Kulzer GmbH, 63450 Hanau (DE)
(72) Erfinder: KEMENY, Andrea, 61250 Usingen (DE); KONDZIELA, Mike, 35781 Weilburg (DE); SUFFEL, Ralf, 63762 Grossostheim (DE); UTTERODT, Andreas, 61267 Neu-Anspach (DE); ECK, Michael, 61389 Schmitten (DE); BALKENHOL, Markus, 63543 Neuberg (DE); KOCOGLU, Raif, 61279 Grävenwiesbach (DE)
(74) Vertreter: Bendele, Tanja
(86) Internationale Anmeldenummer: PCT/EP2018/063945
(87) Internationale Veröffentlichungsnummer: WO 2018/219872

(56) Entgegenhaltungen:
- EP-A1- 3 045 143
- WO-A1-93/11049
- WO-A1-2017/097868
- JP-A- S4 949 796
- US-A- 4 175 658
- US-B1- 6 375 460

## Beschreibung

Die Erfindung betrifft eine zwei Komponenten Mischkapsel zur Aufnahme und zum Mischen von zwei vorzugsweise pulverförmigen oder bevorzugt pastösen oder knetbaren, besonders bevorzugt dentalen Zusammensetzungen mit einem Kapselgehäuse, das an seinem vorderen Ende eine Ausbringtülle aufweist, wobei die Mischkapsel einen ersten Mischraum und einen zweiten Mischraum umfasst, wobei die beiden Mischräume zur Lagerung oder für den Transport voneinander getrennt werden können, indem der Mischraum durch ein drehbar gelagertes Drehelement dessen Drehachse (Y) in etwa senkrecht zur Längsachse (Z) der Mischkapsel, vorzugsweise des zweiten Mischraumes, angeordnet ist, in eine erste Stellung gedreht werden kann, in der der erste Mischraum vom zweiten Mischraum getrennt ist, vorzugsweise sind die Mittelachsen der Mischräume etwa 90° zueinander angeordnet. Durch Drehen des ersten Mischraumes in eine zweite Stellung, in der die Mittelachsen des ersten und zweiten Mischraumes im Wesentlichen koaxial angeordnet sind, bilden die beiden Mischräume einen gemeinsamen Mischraum, wobei durch Aufsetzen eines Auspresskolbens die Zusammensetzung nach dem Mischen ausgefördert werden kann.

Ebenfalls Gegenstand der Erfindung ist ein Verfahren sowie die Verwendung der erfindungsgemäßen Mischkapsel zum Mischen und Applizieren von zwei KomponentenZusammensetzungen, vorzugsweise von dentalen 2K-Zusammensetzungen.

Aus dem Stand der Technik ist eine Vielzahl an Mischkapseln im Dentalbereich bekannt, die zum Lagern und Mischen von zwei Komponentenzusammensetzungen geeignet sind. Kennzeichnend für Mischkapseln im Dentalbereich ist in der Regel ihre geringe Länge von etwa 32 mm, um ein Einsetzen der Mischkapsel in die Haltegabeln von bekannten Mischgeräten zu erlauben. Die Mischkapseln nach dem Stand der Technik weisen in der Regel zwei durch eine Folie mit einer Sollbruchstelle getrennte Kammern auf, die jeweils eine der beiden Bestandteile der zwei Komponentenzusammensetzung umfassen, wobei ein Kolben vor dem Mischen diese Folie durchstößt. Nach dem Mischen kann in die Mischkapsel ein Werkzeug eingesetzt werden, dass einen Austragskolben in der Mischkapsel verschiebt und so die gemischte Zusammensetzung aus der Mischkapsel ausfördern kann.

Nachteilig an den bekannten Mischkapseln ist, dass diese in der Regel dafür ausgelegt sind eine flüssige Monomerkomponente mit einer pulverförmigen Komponente zu vermischen. Aus dem Stand der Technik sind nahezu keine wirtschaftlich herstellbaren oder leicht zu bedienende Mischkapseln bekannt, die in der Lage sind auch zwei pastöse bis knetbare 2K-KomponentenZusammensetzungen miteinander zu mischen. Ferner müssen verschiedene Arretiermechanismen an den Kapseln im Stand der Technik vorgesehen werden, die ein unbeabsichtigtes Durchstoßen der Folie verhindern.

US 4,175,658 A offenbart eine einseitig zu öffnende Mischkapsel mit senkrecht auf der Mischkapselachse angeordnetem Verschluss und zwei innenliegenden Kammern. Die Kammern können durch Drehen eines Elementes um eine senkrecht zur Längsachse drehbares Element eine gemeinsame Kammer ausbilden.

WO2017/097868 A1 offenbart eine zwei Komponenten-Mischkapsel mit einem oberen und unteren drehbaren Griffelement, wobei mindestens einem Griffelement ein erster Mischraum zugeordnet ist.

Aufgabe der Erfindung war es eine Mischkapsel zu entwickeln, die eine Lagerung und ein Mischen von pastösen bis knetbaren und optional mit pulverförmigen oder bevorzugt pastösen bis festen und zugleich thixotropen Mehrkomponentenzusammensetzungen erlaubt, wobei ggf. ebenso pastöse mit pulverförmigen Komponenten gemischt werden können. Ferner bestand die Aufgabe die Mischkapsel so zu dimensionieren, dass diese in gängige Mischapparate, wie sie in Zahnarztpraxen vorhanden sind, einsetzbar ist.

Gelöst wurden die Aufgaben mit einer Mischkapsel nach Anspruch 1 sowie einem Verfahren nach Anspruch 14 und der Verwendung nach Anspruch 17.

In der erfindungsgemäßen Mischkapsel können zwei dentale Zusammensetzungen gelagert und gemischt werden sowie die resultierende gemischte Zusammensetzung durch Verschieben des Verschlusskolbens vom hinteren Ende des Kapselgehäuses zum vorderen Ende des Kapselgehäuses appliziert werden. Gegenstand der Erfindung ist eine Mehr- oder ZweiKomponenten (2K) Mischkapsel zur Aufnahme, insbesondere Lagerung, und zum Mischen von mindestens zwei, insbesondere pastösen, knetbaren bis festen, vorzugsweise thixotropen und vorzugsweise dentalen Zusammensetzungen mit einem Kapselgehäuse, das an seinem vorderen Ende eine Ausbringöffnung aufweist, wie eine Ausbringöffnung direkt am Gehäuse oder insbesondere eine integrale Ausbringtülle oder angesetzten Ausbringtülle, wobei die Mischkapsel ein einziges im Kapselgehäuse drehbar gelagertes oder drehbar angeordnetes Drehelementaufweist, wobei vorzugsweise die Drehachse (Y) des Drehelementes in etwa senkrecht zur Längsachse (Z) der Mischkapsel angeordnet ist, und dem Drehelement ein drehbar gelagerter erster Mischraum zugeordnet ist und vorzugsweise im Kapselgehäuse ein zweiter Mischraum angeordnet ist. Bevorzugt ist die Drehachse des Drehelementes in etwa senkrecht zur Längsachse der Mischkapsel angeordnet. Der dem Drehelement zugeordnete, drehbar gelagerte erste Mischraum liegt vorzugsweise als Rohrabschnitt oder einseitig geschlossene Hülse vor. Bevorzugt bildet der Rohrabschnitt oder die Hülse ein integrales Bauteil mit dem einen Drehelement. Alternativ kann ein separater Mischraum formschlüssig an dem Drehelement festgelegt werden. So kann der Mischraum bspw. mit dem Drehelement, insbesondere in einem Clip, verrastet werden. Die Drehachse des Drehelementes ist in etwa senkrecht zur Längsachse der Mischkapsel angeordnet. Unter einen Drehelement wird vorzugsweise ein Flächenelement, optional ein planares Flächenelement oder ein gewölbtes Flächenelement, vorzugsweise mit Rastnocken zum beweglichen, drehbaren Eingreifen in die Öffnung des Kapselgehäuses, verstanden. An dem flächigen, vorzugsweise in etwa kreisförmigen Drehelement, ist der erste Mischraum angeordnet. In einer besonders bevorzugten Ausführungsform ist das Drehelement mit Rastnocken und erstem Mischraum ein integrales Bauteil.

Erfindungsgemäß ist es bevorzugt, wenn der zweite Mischraum im Bereich des vorderen Endes der Mischkapsel angeordnet ist, insbesondere zwischen der Ausbringtülle und dem ersten Mischraum. Des Weiteren ist am vorderen Ende in Richtung der Längsachse des Kapselgehäuses die Ausbringöffnung angeordnet und am hinteren Ende in Richtung der Längsachse ist der Verschlusskolben angeordnet. Der Verschlusskolben ist, insbesondere entlang der Längsachse in der Mischkapsel verschiebbar, wenn der erste und der zweite Mischraum den gemeinsamen Mischraum bilden.

Eine erfindungsgemäße Mischkapsel weist ein Kapselgehäuse auf, das eine Öffnung zur Aufnahme des Drehelementes im mittleren Bereich des Kapselgehäuses aufweist, insbesondere eine einzige Öffnung zur Aufnahme eines Drehelementes, sowie eine im hinteren Bereich gelegene Öffnung zur Aufnahme eines Verschlusskolbens als auch eine im vorderen Bereich des Kapselgehäuses gelegene Ausbringöffnung, wobei in der Öffnung zur Aufnahme des Drehelementes das Drehelement umfassend den ersten Mischraum angeordnet ist, insbesondere bildet das drehbar gelagerte Drehelement und der erste Mischraum, der vorzugsweise in Form eines Rohrabschnitts oder einer einseitig geschlossenen zylindrischen Hülse vorliegt, ein einteiliges Bauteil, insbesondere ein integrales Bauteil, vorzugsweise ist in der im hinteren Bereich gelegenen Öffnung der Verschlusskolben angeordnet. Vorzugsweise weist das Kapselgehäuse ansonsten eine durchgängig geschlossene, integrale Gehäusewand auf.

Nach einer bevorzugten Alternative ist das Drehelement auf der Oberseite des Kapselgehäuses angeordnet, oder das Drehelement ist auf einer der Seiten des Kapselgehäuses angeordnet, oder das Drehelement ist auf der Unterseite des Kapselgehäuses angeordnet. Die bevorzugte Anordnung des Drehelementes richtet sich nach der Geometrie des Mischgerätes oder der Geometrie des Austraggerätes. Als Unterseite gilt die Seite des Kapselgehäuses auf der die Ausbringöffnung angeordnet ist.

Ferner ist Gegenstand der Erfindung eine Mischkapsel mit einem Drehelement in oder auf das ein separates Griffelement, wie ein Knopf oder länglicher Formkörper, aufsetzbar oder in das ein separates Griffelement oder der Auspresskolben einsetzbar ist, insbesondere ist ein Griffelement in mindestens eine Öffnung im Drehelement einsetzbar. Das Griffelement soll vor und nach dem Mischen die Einstellung der ersten und zweiten Mischkammer zueinander erleichtern. Nach einer Alternative kann das Drehelement auch ein integrales Griffelement aufweisen, wie beispielsweise ein nach außen zulaufendes oder flächiges in etwa senkrecht abstehendes Flächenelement. Nach einer weiteren Alternative kann das Drehelement mindesten eine Nut aufweisen. In die Nut kann vorzugsweise ein Hilfsmittel zur Verbesserung des Drehmomentes eingesetzt werden. Sowohl die Nut als auch das Hilfsmittel können übliche Profilierungen aufweisen. Das Griffelement kann nahezu senkrecht scheibenförmig oder als Stift auf dem Drehelement angeordnet sein, oder mindestens zwei gewölbte Vertiefungen zur Aufnahme zweier Finger aufweisen.

Nach einer Alternative weist das Drehelement eine mehreckige Öffnung oder eine Öffnung mit einer ein- bis mehrzähligen Drehachse, insbesondere eine Innen-Mehrkantöffnung, auf, in die der Auspresskolben mit seinem vorderen Bereich, der ein entsprechendes mehreckiges Profil oder ein Profil mit einer ein- bis mehrzähligen Drehachse aufweist, einsetzbar ist. Vorzugsweise ist der Auspresskolben im vorderen Bereich mit einem Außen-Mehrkant-Profil, welches zur mehreckigen Öffnung passt, ausgebildet. Bevorzugte Profile sind Innensechskant und AußenSechskant Profil. Generell sind auch andere Profile wie sternförmige, zahnförmige oder blumenförmige Profile denkbar.

Die beiden pastösen, knetbaren bis festen, vorzugsweise thixotropen und vorzugsweise dentalen Zusammensetzungen, wie Zusammensetzung A und Zusammensetzung B, liegen vorzugsweise jeweils getrennt im ersten und zweiten Mischraum als je eine einzige pastöse bis knetbare Zusammensetzung vor, insbesondere vorzugsweise als einstückige Zusammensetzung. Alternativ kann die Zusammensetzung in Form mehrerer Komponenten vorliegen, insbesondere weist eine Komponente mindestens 1,5 mm in einer Dimension auf. Die Zusammensetzung liegt vorzugsweise nicht pulverförmig vor.

An dem einen Drehelement kann eine wandartige Erhöhung oder andersartig geformte Erhöhung als Griff für ein leichteres Drehen ausgebildet sein. Die erfindungsgemäße Mischkapsel mit Kapselgehäuse und ohne Führungsadapter und ohne Auspresskolben weist vorzugsweise eine Länge von kleiner gleich 10 cm, bevorzugt kleiner gleich 8 cm, besonders bevorzugt eine Länge von kleiner gleich 5 cm oder kleiner gleich 3,5 cm auf. Der gesamte Mischraum der Mischkapsel weist vorzugsweise eine Länge von 2,0 bis 4,0 cm, insbesondere von 2,5 bis 3,0 cm bei einem Durchmesser von 0,5 bis 2,0 cm auf, insbesondere von 0,8 bis 1,2 cm. Das Volumen des gesamten Mischraumes beträgt etwa von 20 bis 200 mm³, insbesondere von 50 mm³ bis 135 mm³. Die erfindungsgemäße Mischkapsel ist derart ausgebildet, dass sie in gängigen PLT Austragsgeräten bzw. PLT Applikatoren eingesetzt werden kann.

Der drehbar gelagerte Mischraum kann innerhalb eines Rohrabschnittes oder in einem einseitig geschlossenen Rohrabschnitt als einseitig geschlossene Hülse angeordnet sein. Vorzugsweise ist der erste Mischraum in einem Rohrabschnitt angeordnet, der integral mit dem drehbar gelagerten Drehelement verbunden ist. Der erste oder der zweite Mischraum sind als Teile des herstellbaren gesamten Mischraumes zu verstehen und können den gesamten Mischraum bilden, in dem vorzugsweise die Mischung erfolgt.

Nach einer bevorzugten Ausführungsform ist das drehbar in dem Kapselgehäuse gelagerte oder drehbar angeordnete Drehelement mit dem Kapselgehäuse verrastet oder aneinandergesteckt und mit dem Kapselgehäuse drehbar verbunden. Die Verbindung des Drehelementes mit dem Kapselgehäuse kann bspw. mittels Rastnocken am Kapselgehäuse erfolgen. Als ein drehbares Drehelement oder drehbarer Mischraum, Rohrabschnitt oder Hülse wird erfindungsgemäß verstanden, dass die vorgenannten Komponenten um eine Drehachse, die sich in etwa senkrecht zur Längsachse des Kapselgehäuses bzw. senkrecht zur Längsachse des zweiten Mischraumes befindet um mindestens 30° vorzugsweise mindestens um 90° drehbar sind, vorzugsweise sind die Komponenten um 360° drehbar. Wenn die Komponenten um 360° drehbar sind, kann es bevorzugt sein, auf dem Drehelement Markierungen, die die Stellung der ersten Mischkammer anzeigen anzubringen, insbesondere in Relation zur zweiten Mischkammer. Vorzugsweise weist das Drehelement und/oder die Mischkammer Rastnocken auf, damit der Anwender spürt, wenn er die exakte koaxiale Stellung der Mischkammer eingestellt hat.

Ferner ist es bevorzugt, wenn an dem im Kapselgehäuse drehbar gelagerten Drehelement der erste Mischraum angeordnet ist, insbesondere bildet das drehbar gelagerte Drehelement und der erste Mischraum ein einteiliges Bauteil, insbesondere ein integrales Bauteil. Der Mischraum kann vorzugsweise in Form eines Rohrabschnitts oder in einer Alternative als einseitig geschlossener Rohrabschnitt bspw. als einseitig geschlossene zylindrische Hülse vorliegen, wobei diese vorzugweise mit dem Drehelement als ein integrales Bauteil vorliegt. Der Rohrabschnitt kann zylindrisch, elliptisch, oval, kreisförmig, als auch polygonal, wie rechteckig oder sechseckig ausgebildet sein.

Bevorzugt weisen der Rohrabschnitt oder die einseitig geschlossene zylindrische Hülse an ihren offenen Enden an je zwei sich gegenüberliegenden Enden der Mantelflächen zumindest bereichsweise eine gewölbte Kontur auf, insbesondere weisen die Enden der Mantelflächen eine Kontur auf, die drehbar und dicht an einer zylindrische oder nicht zylindrischen aber kreisförmigen Mantelinnenflächen des Kapselgehäuses anliegen. Dabei ist es bevorzugt, wenn zwei sich gegenüberliegenden Enden der Mantelflächen eine Kontur eines Kreisabschnitts aufweisen. Optional weisen die offenen Enden eine umlaufende wellenförmige Kontur auf, insbesondere sind der Rohrabschnitt oder die einseitig geschlossene zylindrische Hülse in einem kreisförmigen mittleren Bereich des Kapselgehäuses mit den offenen Enden drehbar und dicht an der Gehäuseinnenwand anbringbar.

Nach zwei alternativen bevorzugten Ausführungsformen weist die Mischkapsel einen mit dem drehbar gelagerten Drehelement verbundenen Rohrabschnitt auf oder eine einseitig geschlossene zylindrische Hülse auf, die den ersten Mischraum bilden, wobei sich entweder
a) im vorderen Bereich im Kapselgehäuse der zweite Mischraum befindet oder
b) im hinteren Bereich im Kapselgehäuse der zweite Mischraum befindet. Dabei ist es bevorzugt, wenn der Rohrabschnitt oder die Hülse ein integrales Bauteil mit dem Drehelement bilden. Alternativ kann der als separates Bauteil vorliegende Mischraum formschlüssig an dem Drehelement festgelegt werden.

Die erfindungsgemäße Mischkapsel kann in verschiedene Stellungen zum Lagern, Mischen oder Applizieren überführt werden. So kann die erfindungsgemäße Mischkapsel mit dem drehbargelagerten Drehelement welches mit dem Rohrabschnitt verbunden ist, insbesondere integral verbunden, den ersten Mischraum bilden und im vorderen Bereich im Kapselgehäuse ist der zweite Mischraum angeordnet,
wobei sich die Mischkapsel a) in einer ersten Stellung bspw. zur Lagerung oder für den Transport befindet, wenn sich die Längsachse (Z1) des Rohrabschnitts vorzugsweise in etwa 90° verdreht zur Längsachse (Z) des Kapselgehäuses befindet, so dass der erste Mischraum, insbesondere umfassend eine Zusammensetzung B, und der zweite Mischraum, insbesondere umfassend eine Zusammensetzung A, voneinander getrennt sind, oder wobei sich die Mischkapsel b) in einer zweiten Stellung bspw. "Mischstellung Mischung" befindet, wenn sich die Längsachse (Z1) des Rohrabschnitts vorzugsweise im Wesentlichen koaxial zur Längsachse (Z) des Kapselgehäuses oder des zweiten Mischraumes befindet, so dass der erste Mischraum und der zweite Mischraum einen gemeinsamen Mischraum bilden, insbesondere umfassend die Zusammensetzungen A und B, alternativ befindet sich die Mischkapsel in der zweiten Stellung, wenn der Rohrabschnitt oder die einseitig geschlossene Hülse umfassend den ersten Mischraum so gedreht sind, dass der erste und der zweite Mischraum einen gemeinsamen Mischraum bilden, oder, wobei sich die Mischkapsel in b) der zweiten Stellung ebenfalls in einer Ausbringstellung c) befindet, wenn der Führungsadapter mit beweglichem Auspresskolben am hinteren Ende des Kapselgehäuses angeordnet ist, wobei der bewegliche Auspresskolben den Verschlusskolben durch den ersten Mischraum und den zweiten Mischraum in Richtung auf das vordere Ende des Kapselgehäuses oder in Richtung auf den hinteren Bereich in der Ausbringtülle verschieben kann. Mit dem Auspresskolben kann der Verschlusskolben vorzugsweise im Kapselgehäuse in Richtung auf die Ausbringöffnung geschoben werden, so dass die gemischte Zusammensetzungen C durch den Verschlusskolben in Richtung auf die Ausbringöffnung geschoben wird und aus der Ausbringöffnung herausgedrückt werden kann.

Als getrennt gelten die Mischräume, wenn diese räumlich voneinander getrennt sind und die Zusammensetzungen A und B nicht miteinander wechselwirken können.

Bevorzugt weist das Drehelement mindestens ein Arretiermittel, wie eine Rastnocke, auf und optional weist das Kapselgehäuse der Mischkapsel mindestens ein Arretiermittel auf, wie eine Vertiefung, die vorzugsweise als Positiv und Negativ in der zweiten Stellung der Mischkapsel ineinandergreifen, in der aus dem ersten Mischraum und dem zweiten Mischraum ein gemeinsamer Mischraum gebildet wird. Somit wird die Position, in der der erste Mischraum und der zweite Mischraum einen gemeinsamen Mischraum bilden, durch die Arretiermittel fixiert. Die Arretiermittel können beispielsweise mindestens eine Rastnocke und eine entsprechende Vertiefung sein, die ineinandergreifen. Gleichfalls können die mindestens eine Rastnocke an der Mischkapsel oder die mindestens eine Vertiefung an dem Drehelement ausgebildet sein. Die Arretiermittel, wie Rastnocke(n), und die zum Einrasten der Rastnocken entsprechende Vertiefung(en), vorzugsweise mindestens zwei im etwa 90° Winkel zueinander angeordnete Vertiefungen, erlauben die Einstellung einer Transport- oder Lagerposition des ersten Mischraumes etwa senkrecht zur Längsachse der Mischkapsel, die der ersten Stellung entspricht, und eine Misch- und/oder Austragsposition, in der die Längsachse des ersten Mischraums koaxial zur Längsachse der Mischkapsel arretiert ist, die der zweiten Stellung entspricht.

An die erfindungsgemäße Mischkapsel ist vorzugsweise an ihrem hinteren Ende des Gehäuses ein Führungsadapter anbringbar, in dem ein beweglicher Auspresskolben angeordnet ist. Der im Führungsadapter bewegliche, vorzugsweise arretierte Auspresskolben, kann im Führungsadapter bewegt werden, indem eine gewisse Kraft aufgebracht wird, so dass sich die Arretierung löst. Die Arretierung kann aus mindestens einer Erhöhung auf dem äusseren Umfang des Auspresskolbens bestehen, die innen am Führungsadapter anliegt, insbesondere formschlüssig oder kraftschlüssig.

Der Führungsadapter mit beweglichem Auspresskolben kann vorzugsweise mittels eines Bajonett-Verschlusses, einer Schraub- oder Clipverbindung oder anderen dem Fachmann bekannten Maßnahmen am hinteren Ende des Kapselgehäuses festgelegt werden. Dabei kann es bevorzugt sein, dass vor dem Festlegen des Führungsadapters der Auspresskolben in die Vertiefung des Verschlusskolbens eingesetzt und der Verschlusskolben entlang der ersten Mischkammer in das Kapselgehäuse hineingeschoben werden kann, um anschließend den Führungsadapter an dem hinteren Ende des Kapselgehäuses festzulegen. Erfindungsgemäß wird durch das Aufstecken des Führungsadapters mit Auspresskolben der Verschlusskolben in das Kapselgehäuse in Richtung auf die Ausbringöffnung verschoben. In dieser Position kann die Mischkapsel in übliche Applikatoren für PLT (Compulen) eingesetzt werden. Durch das Verschieben des Verschlusskolbens beim Aufstecken des Führungsadapters konnte der Hub in der Mischkapsel unter Beachtung des maximalen Hubs von üblichen Applikatoren vergrößert werden.

Ebenfalls Gegenstand der Erfindung ist eine Mischkapsel mit Kapselgehäuse, wobei in dem Kapselgehäuse an dessen hinteren Ende ein Verschlusskolben angeordnet ist der insbesondere die Mischkapsel an ihrem hinteren Ende verschließt, vorzugsweise luftdicht und/oder feuchtigkeitsdicht. Dabei ist der Verschlusskolben entlang der Längsachse (Z) der Mischkapsel durch den ersten Mischraum oder den hohlen Rohrabschnitt und einen zweiten Mischraum hindurchführbar, vorzugsweise durch den gemeinsamen Mischraum, wenn der erste Mischraum oder der Rohrabschnitt im Wesentlichen koaxial zur Längsachse (Z) der Mischkapsel ausgerichteten sind, wobei vorzugsweise der erste und der zweite Mischraum einen gemeinsamen Mischraum bilden. Der Verschlusskolben ist vorzugsweise innen im hinteren Ende des Gehäuses angeordnet. Der Verschlusskolben ist vorzugsweise entlang der Längsachse der Mischkapsel verschiebbar angeordnet und verschließt die Mischkapsel an ihrem hinteren Ende, vorzugsweise luftdicht und/oder feuchtigkeitsdicht. Der Verschlusskolben ist vorzugsweise in einer Öffnung am hinteren Ende des Kapselgehäuses angeordnet.

Der zweite Mischraum wird vorzugsweise durch einen Bereich im vorderen mittleren Bereich des Kapselgehäuses gebildet. Alternativ kann der zweite Mischraum auch im hinteren Bereich des Kapselgehäuses angeordnet sein. Der erste Mischraum befindet sich im drehbar gelagerten Rohrabschnitt oder in der drehbar gelagerten einseitig geschlossenen Hülse mit einem Boden, wobei der Boden der einseitig geschlossenen Hülse mittels des Verschlusskolbens von der Hülse lösbar ist, um den Verschlusskolben durch die Hülse hindurchschieben zu können. Sofern sich der erste Mischraum in einem drehbar gelagerten Rohrabschnitt befindet, insbesondere einem hohlen Rohrabschnitt, kann der Verschlusskolben in der zweiten Stellung durch den Rohrabschnitt und optional den zweiten Mischraum geschoben werden, wenn die Achse des ersten Mischraumes, insbesondere des hohlen Rohrabschnitts, koaxial zur Längsachse der Mischkapsel ausgerichtet ist.

Gleichfalls Gegenstand der Erfindung ist eine Mischkapsel in der der bewegliche Verschlusskolben in einer Alternative in seinem Durchmesser reduzierbar ist, insbesondere ist der Durchmesser (D1) des Verschlusskolbens im Wesentlichen auf den Durchmesser (D2) reduzierbar. Dazu trägt der Verschlusskolben vorzugsweise an seinem äußeren Umfang Lamellen. In einer weiteren Alternative kann der Verschlusskolben einen festen Durchmesser aufweisen. Der erfindungsgemäße Verschlusskolben weist vorzugsweise an seiner dem Mischraum abgewandten Seite eine Vertiefung auf, in die der vordere Bereich des Auspresskolbens einsteckbar ist. Ferner weist der Verschlusskolben an seinem äußeren Umfang mindestens eine, vorzugsweise radial abstehende Lamelle auf. Nach bevorzugten Alternativen weist der Verschlusskolben zwei bis eine Vielzahl an Lamellen am äußeren Umfang auf. Die Lamellen können vorzugsweise aus einem elastischen Material, bspw. TPE (Thermoplastischem Elastomer) oder aufgrund ihrer Geometrie elastisch ausgebildet sein. Die Lamellen bilden vorzugsweise ein integrales Bauteil mit dem Verschlusskolben. Ferner können die Lamellen an einer Seite am äußeren Umfang oder an beiden Seiten mit einer Phase ausgebildet sein. Die Lamellen können aus dem gleichen Material wie der Verschlusskolben oder auch aus einem Silicon oder einen anderen geeigneten Material hergestellt sein.

An der dem Mischraum zugewandten Seite weist der Verschlusskolben vorzugsweise zumindest teilweise eine definierte Oberflächenrauheit auf. Bevorzugt weist die dem Mischraum zugewandte Seite eine Fläche einer definierten Größe, vorzugsweise eine kreisförmige Fläche mit Oberflächenrauheit, auf. Die Oberflächenrauheit kann mittels Erodieren, abtragenden Verfahren, wie Sandstrahlen, Ätzen oder auch aufbauenden Verfahren etc. hergestellt werden. Die Oberflächenrauheit liegt vorzugsweise bei einer Rauheit (mitten Rauheit) Ra von 3,5 µm (Mikrometer) bis 30 µm, vorzugsweise von 6 µm bis 24 µm, bevorzugt von 8 µm bis 20 µm, besonders bevorzugt von 10 µm bis 20 µm, alternativ um 10 µm mit +/- 2,5 µm. Alternativ kann die Rauheit der Erodierstruktur nach VDI 12 3400 die Kennung 30, 33, 36, 39 oder 42 aufweisen. Gleichfalls kann das Kapselgehäuse oder der Rohrabschnitt soweit erforderlich zumindest teilweise bis vollständig mit einer definierten Oberflächenrauheit versehen sein.

Ferner weist die Mischkapsel an ihrem Gehäuse a) die Ausbringöffnung auf. Die Ausbringöffnung ist vorzugsweise in einer Ausbringtülle als integraler Bestandteil des Kapselgehäuses ausgebildet. Alternativ kann eine Ausbringöffnung b) in einer an das Kapselgehäuse festlegbaren Ausbringtülle angeordnet sein. Die Ausbringtülle ist vorzugsweise in sich gebogen und weist eine Form wie bekannte Mischkapseln bzw. Carpulen auf, so weist sie bspw. eine Form auf, die ein Austragen des Dentalmaterials in eine Zahnkavität erlaubt.

Nach einer weiteren Alternative ist es bevorzugt, wenn in der Ausbringtülle innen im vorderen oder hinteren Bereich vor dem Auslass mindestens ein Widerstandsmittel angeformt ist, vorzugsweise ist das Widerstandsmittel so ausgebildet, dass es eine Veränderung der Viskosität der auszutragenden Zusammensetzung und/oder ein zusätzliches Vermischen der auszutragenden Zusammensetzung bewirken kann. In bevorzugten Ausführungsformen ist das Widerstandsmittel eine nicht über den gesamten Durchmesser reichende Wand oder mindestens eine Nase.

Das Material aus dem die Einzelteile der Mischkapsel, wie das Kapselgehäuse, die Ausbringtülle, das Drehelement oder die Griffelemente, der Rohrabschnitt, die Hülse, der Verschlusskolben, der Führungsadapter, der Auspresskolben und/oder das Widerstandsmittel bestehen umfasst vorzugsweise einen tribologisch modifizierten Kunststoff, wie PBT-POM, Polybutylenterephthalat (PBT), Polyoxymethylen (POM), PC (Polycarbonat), sowie Kunststoffe umfassend organische und/oder anorganische Füllstoffe, wie bspw. die folgenden Additive, wie Silikonöl, Grafit (GR), Fluorkohlenstoff (TF), Kohlenstofffasern (CF), MoS₂ (MO), Polyolefinwaxen oder andere Festschmierstoffe. Ebenfalls geeignete Materialien zur Herstellung der vorgenannten Kapselbestandteile können ausgewählt sein aus einem polymeren Material, gefülltem polymeren Material, einem faserverstärktem Polymer, Hybridmaterial, wobei das polymere Material ausgewählt sein kann aus Polycarbonat, Polyamid, Fluorpolymeren, Polysulfid enthaltenden Polymeren, Polysulfon enthaltenden Polymeren, Polyaryletherketonen, Polyimiden, PAEK (Polyaryletherketonen), PEEK (Polyetheretherketonen), PEK (Polyetherketonen), PEKK (Polyetherketonketonen), PEEEK (Polyetheretheretherketonen), PEEKK (Polyetheretherketonketonen), PEKEKK (Polyetherketonetherketonketonen), PES (Polyethersulfonen), PPSU (Polyphenylensulfonen), Polyarylsulfonen, PSU (Polysulfonen), PPS (Polyphenylensulfid), PFA (Perfluoralkoxy-Polymeren), PFE (Polyfluorenylenethynylen-Polymeren), PVDF (Polyvinylidenfluorid), PTFE (Polytetrafluoroethylen), PAI (Polyamidimiden), PI (Polyimiden), PEI (Polyetherimiden), PBI (Polybenzimidazolen). Der Auspresskolben ist vorzugsweise aus Polycarbonat gefertigt. Der Verschlusskolben kann vorzugsweise aus einem TPE (Thermoplastischen Elastomer) mit einer Härte von 60 - 100 Shore A, vorzugsweise 70 - 90 Shore A gefertigt sein. Ein bevorzugtes TPE kann umfassen TPE-S, wie SEBS, Styrol-Ethenbuten-Styrol-Blockcopolymer.

Nach einer weiteren Ausführungsform ist Gegenstand der Erfindung ein Verfahren zum Mischen von mindestens zwei Zusammensetzungen A und B zu einer Zusammensetzung C in der erfindungsgemäßen Mischkapsel, insbesondere von pastösen, knetbaren bis festen, vorzugsweise thixotropen Zusammensetzungen, besonders bevorzugt von dentalen Zusammensetzungen, umfassend die Schritte
(i) Überführen der Mischkapsel aus einer a) ersten Stellung in eine b) zweite Stellung indem durch Drehen des Drehelementes um seine Drehachse (Y) mit dem Rohrabschnitt in dem sich der erste Mischraum und die Zusammensetzung B befindet, der Rohrabschnitt, insbesondere aus einer nicht koaxialen Stellung seiner Längsachse zur Längsachse der Kapsel, vorzugsweise einer etwa senkrecht zur Längsachse angeordneten Stellung, in Richtung auf die Längsachse (Z) des Kapselgehäuses, insbesondere im Wesentlichen koaxial zur Längsachse (Z) des Kapselgehäuses gedreht wird, so dass der erste Mischraum umfassend die Zusammensetzung B und der zweite Mischraum im Kapselgehäuse umfassend die Zusammensetzung A einen gemeinsamen Mischraum bilden,
(ii) Mischen der Zusammensetzungen A und B miteinander, wobei sich insbesondere die Mischkapsel in der zweiten Stellung b) befindet, und
(iii) Erhalten der Zusammensetzung C.

Das (iv) Ausbringen der Zusammensetzung C aus der Mischkapsel erfolgt vorzugsweise mit den Schritten (iv.1) Festlegen des Führungsadapters mit beweglichem Auspresskolben am hinteren Ende des Kapselgehäuses, und optional (iv.2) Einschieben des Auspresskolbens zusammen mit dem Verschlusskolben in das Kapselgehäuse der Mischkapsel, vorzugsweise bis der Verschlusskolben gegen die vordere innere Wand des Kapselgehäuses gedrückt wird, so dass der Verschlusskolben vom Auspresskolben durch den gemeinsamen Mischraum geschoben wird.

In dem erfindungsgemäßen Verfahren befindet sich vorzugsweise die Mischkapsel a) in einer ersten Stellung, wenn sich die Längsachse (Z1) des Rohrabschnitts vorzugsweise in etwa mindestens 30°, vorzugsweise um etwa 90° verdreht zur Längsachse (Z) des Kapselgehäuses befindet, so dass der erste Mischraum, insbesondere umfassend die Zusammensetzung B, und der zweite Mischraum, insbesondere umfassend die Zusammensetzung A, voneinander getrennt sind, oder wobei sich die Mischkapsel
b) in einer zweiten Stellung, bspw. einer Mischstellung befindet, wenn sich die Längsachse des Rohrabschnitts, vorzugsweise im Wesentlichen koaxial zur Längsachse des Kapselgehäuses befindet, so dass der erste Mischraum und der zweite Mischraum einen gemeinsamen Mischraum bilden, insbesondere umfassend die Zusammensetzungen A und B, oder,
wobei sich die Mischkapsel in Stellung b) auch in einer Ausbringstellung c) befindet, wenn der Führungsadapter mit beweglichem Auspresskolben am hinteren Ende des Kapselgehäuses angeordnet ist, wobei der bewegliche Auspresskolben den Verschlusskolben durch den gemeinsamen Mischraum in Richtung auf den Auslass oder die Ausbringöffnung verschieben kann oder der Verschlusskolben gegen die vordere innere Wand des Kapselgehäuses verschoben werden kann. Dabei wird durch den Verschlusskolben vorzugsweise die Zusammensetzung C in Richtung auf die Ausbringöffnung geschoben und kann durch die Ausbringöffnung appliziert werden.

Beim Mischen wird die Mischkapsel zumindest entlang eines Teils der Längsachse der Mischkapsel bzw. des Kapselgehäuses oszillierend bewegt. Bevorzugt wird die Mischkapsel mit einem Teil ihrer Längsachse entlang einer Kreisbahn mit einem Radius oszillierend bewegt. Zum Mischen der Zusammensetzungen A und B ist der Führungsadapter mit beweglichem Auspresskolben vorzugsweise noch nicht am hinteren Ende des Kapselgehäuses festgelegt.

In einer Alternative ist der Rohrabschnitt als eine einseitig geschlossene Hülse mit Boden ausgebildet in dem sich der erste Mischraum und die Zusammensetzung B befindet, wobei der Boden der Hülse nach dem Mischen vom Verschlusskolben in die Hülse verschoben werden kann, insbesondere kann der Boden bis in das vordere Ende des Kapselgehäuses geschoben werden. Der Boden der Hülse kann folienartig ausgebildet sein und kann Sollbruchstellen aufweisen. Nach einer bevorzugten Ausführungsform wird der erste Mischraum von einem beidseitig offenen Rohrabschnitt gebildet.

Ferner ist Gegenstand der Erfindung die Verwendung der erfindungsgemäßen Mischkapsel mit einem Kapselgehäuse, wobei das Kapselgehäuse eine Öffnung zur Aufnahme eines Drehelementes umfassend den ersten Mischraum, eine im hinteren Bereich gelegenen Öffnung zur Aufnahme eines Verschlusskolbens und eine im vorderen Bereich gelegene Ausbringöffnung aufweist, wobei in der Öffnung zur Aufnahme des Drehelementes das Drehelement umfassend den erstem Mischraum angeordnet ist, insbesondere bildet das drehbar gelagerte Drehelement und der erste Mischraum, der vorzugsweise in Form eines Rohrabschnitts oder einer einseitig geschlossenen zylindrischen Hülse vorliegt, ein einteiliges Bauteil, insbesondere ein integrales Bauteil, wobei in der im hinteren Bereich gelegenen Öffnung der Verschlusskolben angeordnet ist, vorzugsweise weist das Kapselgehäuse ansonsten eine durchgängig geschlossene Gehäusewand, insbesondere eine integrale Gehäusewand, auf, wobei in der Mischkapsel die erste Mischkammer durch Drehen um die Drehachse (Y) des Drehelementes, wobei die Drehachse (Y) in etwa senkrecht zur Längsmittelachse (Z) des Kapselgehäuses der Mischkapsel angeordnet ist, in eine erste Stellung zur Lagerung und in eine zweite Stellung zum Mischen und Applizieren drehbar ist, wobei in der zweiten Stellung die erste Mischkammer mit einer zweiten Mischkammer eine gemeinsame Mischkammer bilden.

Offenbart wird ferner die Verwendung der Mischkapsel zum Lagern, Mischen und Applizieren (Ausbringen) von pastösen bis knetbaren oder festen dentalen zwei KomponentenZusammensetzungen. Die mischbaren Zusammensetzungen sind vorzugsweise thixotrope dentale Zusammensetzungen.

Die in den nachfolgenden Figuren dargestellten Ausführungsformen stellen beispielhafte erfindungsgemäße Gegenstände dar, ohne die Erfindung auf diese Gegenstände zu beschränken.

Die Figuren stellen dar:
**Figur 1**: Erfindungsgemäße Mischkapsel **1** (leer) mit Führungsadapter **7** in Schnittdarstellung und nach vorne geschobenen Verschlusskolben **6**.
**Figur 2a** und **2b**: Wie Figur 1, wobei Figur 2a eine Schnittdarstellung und Fig. 2b eine Draufsicht ist.
**Figuren 3a****, 3a***, **3b** und **3b***: Mischkapsel **1** in Schnittdarstellung in erster Stellung (Lagerposition) mit Zusammensetzungen **A** und **B** - mit Führungsadapter **7** und Auspresskolben **8**, der nicht festgelegt ist.
**Figuren 4a****,** **4b** und **4c**: Schnittdarstellung der Mischkapsel **1** in zweiter Stellung mit koaxialer Ausrichtung des ersten und zweiten Mischraumes **5a** und **5b**.
**Figuren 5a, 5b** und **5c**: Mischkapsel **1** mit gemischter Zusammensetzung **C** bereit zur Applikation mit aufgesetztem Führungsadapter **7** und Auspresskolben **8**.
**Figuren 5d** und **5e**: Mischkapsel in einer Stellung, in der die Applikation der Zusammensetzung **C** bereits erfolgt ist mit ganz nach vorne geschobenem Verschlusskolben und Auspresskolben.
**Figuren 6a, 6b, 6c**: Drehelemente mit Rohrabschnitt
**Figuren 7a, 7b, 7c** und **7d**: Verschlusskolben **6**
**Figuren 8a, 8b**: Auspresskolben **8**
**Figur 9****:** Führungsadapter **7** mit Bajonett-Verschluss
**Figuren 10a** und **10b**: Ausbringtülle innen mit Widerstandsmitteln **9**
**Figuren 11a, 11b, 11c****,** **11d, 11e** und **11f**: Unterschiedliche Drehelemente **4.2**, an die verschiedene Griffelemente 13 anbringbar oder angeformt sind.

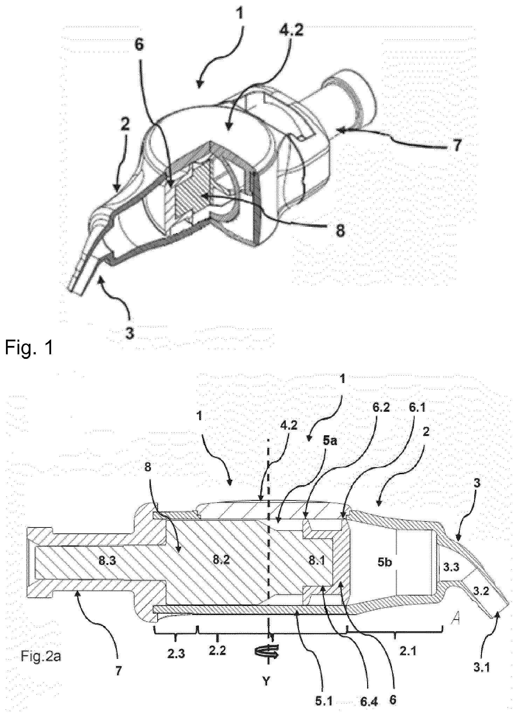

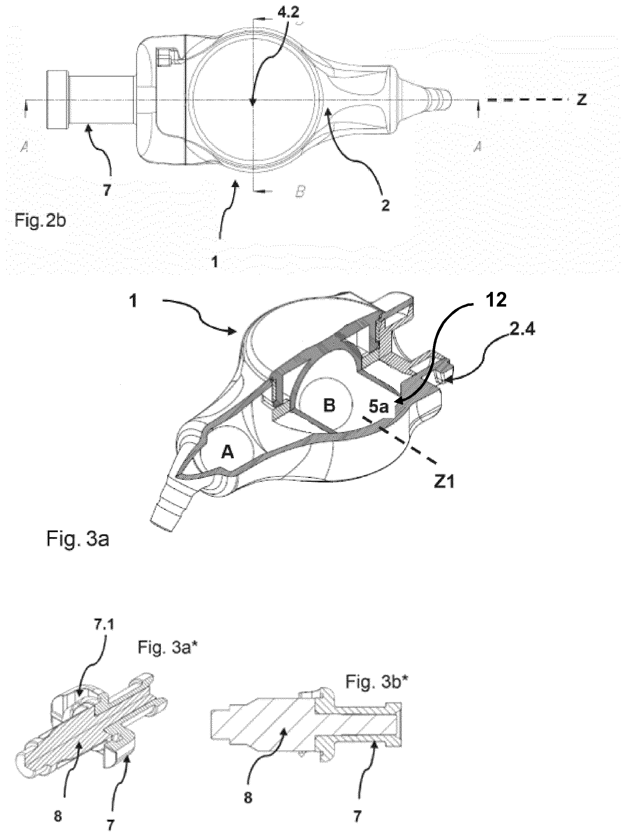

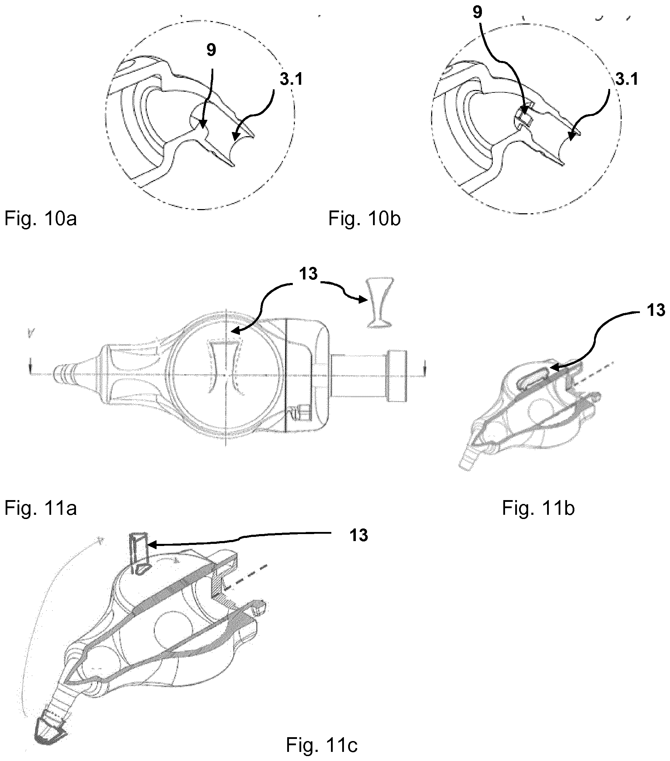

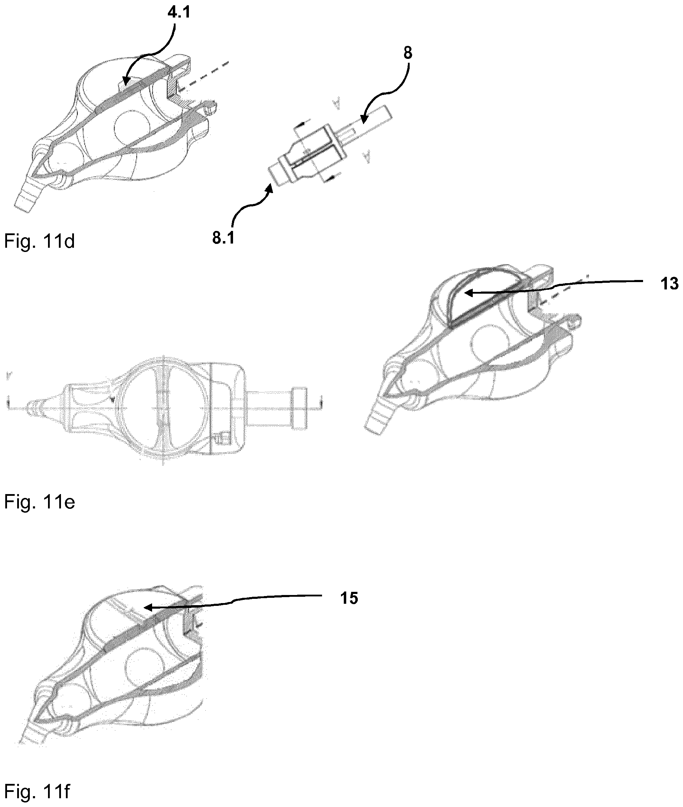

Figur 1 zeigt eine erfindungsgemäße leere Mischkapsel **1** mit Führungsadapter **7** und Auspresskolben **8** in Schnittdarstellung mit nach vorne geschobenem Verschlusskolben **6**. Die Mischkapsel **1** umfasst ein Kapselgehäuse **2** mit einer Ausbringtülle **3**. Ferner ist das drehbar gelagerte Drehelement **4.2** dargestellt. Figuren 2a und 2b stellen eine Mischkapsel nach Figur 1 im Querschnitt und in der Draufsicht dar. In Figur 2a ist der erste Mischraum **5a** mit dem zweiten Mischraum **5b** in der Mischkapsel **1** koaxial angeordnet, so dass der Verschlusskolben **6** durch den Auspresskolben **8**, der beweglich im Führungsadapter **7** gelagert ist, durch den ersten Mischraum **5a** bis an den zweiten Mischraum **5b** eingeschoben dargestellt ist. In dieser Position bilden der erste und der zweite Mischraum den gemeinsamen Mischraum. In der Ausbringtülle **3** sind der hintere **3.3** und der mittlere **3.2** Bereich im Inneren der Ausbringtülle sowie die Ausbringöffnung **3.1** dargestellt. Das Drehelement **4.2** kann um die Drehachse **Y** gedreht werden, wobei gleichzeitig der Rohrabschnitt **5.1** umfassend den ersten Mischraum **5a** mitgedreht wird. Vorzugsweise weist das Drehelement mindestens eine Öffnung **4.1**, wie in Fig. 11d, auf der äußeren Oberfläche auf, in die mindestens ein Griffelement **13**, wie in den Figuren 11a, 11b und 11c dargestellt, einsetzbar oder verrastbar ist. Die Längsachse **Z** der Mischkapsel ist in Figur 2b angedeutet. In dem Verschlusskolben **6** ist der vordere Bereich **8.1** des Auspresskolbens in die Vertiefung **6.4** eingesteckt. Der mittlere Bereich **8.2** des Auspresskolbens **8** dient der Führung des Kolbens in der Mischkammer. Der hintere Bereich **8.3** kann mit einem externen Werkzeug weiter in Richtung der Mischkammern geschoben werden. Die Lamellen **6.1** und **6.2** des Verschlusskolbens **6** liegen innen an der Mischkammer an.

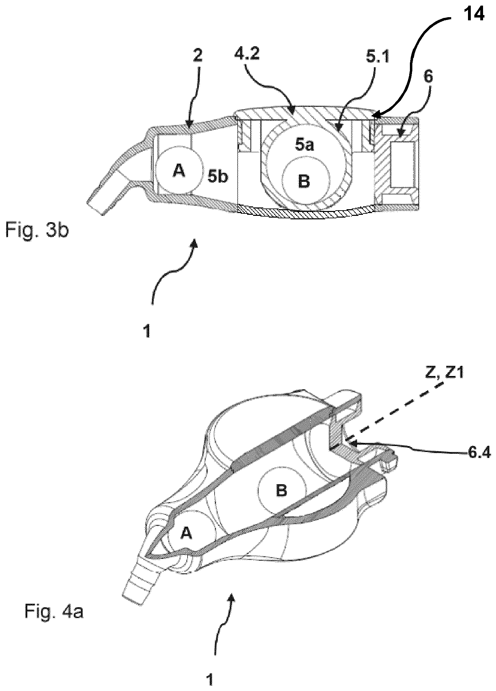

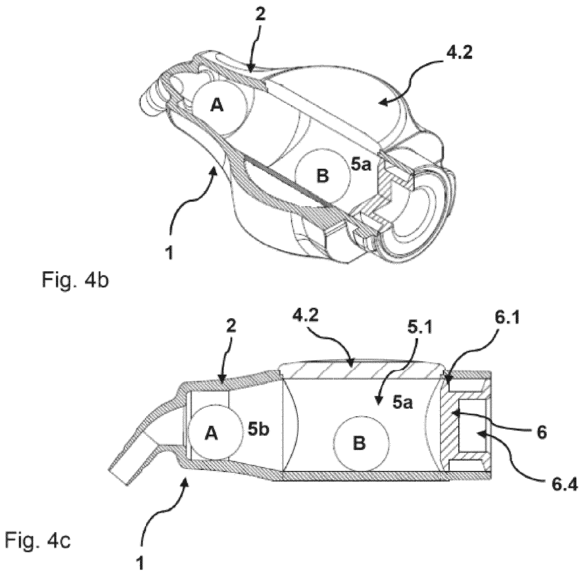

Figuren 3a, 3a* und 3b, 3b* zeigen eine Mischkapsel **1** in Schnittdarstellung in der erster Stellung (Verkaufs-/Lagerposition) enthaltend die Zusammensetzung **B** im ersten Mischraum **5a** und die Zusammensetzung **A** im zweiten Mischraum **5b**. Die Längsachse **Z1** des ersten Mischraumes bzw. Rohrabschnittes ist etwa senkrecht zur Längsachse **Z** der Kapsel bzw. des Kapselgehäuses dargestellt. An der Kapsel ist ein Verschlussmittel **2.4** im hinteren Bereich angeformt, wie bspw. ein Bajonett-Verschluss **2.4**. Ferner zeigen die Figuren 3a* und 3b* den Führungsadapter **7** mit eingestecktem Auspresskolben **8**. Der Auspresskolben ist mit im oberen Bereich des Auspresskolbens am äußeren Umfang umlaufenden Arretiermitteln **8.4**, wie Erhöhungen oder Rastnocken bzw. Nasen **8.4**, mit dem Adapter verrastet. Figur 3b zeigt einen Rohrabschnitt **5.1** mit erstem Mischraum **5a**, dessen Längsachse **Z1** um 90° zur Längsachse **Z** der Kapsel verdreht ist. Im zweiten Mischraum **5b** ist die Zusammensetzung **A** dargestellt. In den Figuren 4a, 4b und 4c ist die zweite Stellung der Mischkapsel **1** dargestellt, in der der erste Mischraum **5a** und der zweite Mischraum **5b** koaxial zueinander angeordnet sind. In der zweiten Stellung können die Zusammensetzungen **A** und **B** miteinander in dem gebildeten gesamten Mischraum **5a** und **5b** gemischt werden. In dieser Ausführungsform bilden der Rohrabschnitt **5.1** mit dem Drehelement **4.2** ein integrales Bauteil. Das Drehelement **4.2** ist drehbar mit dem Kapselgehäuse **2** in der Öffnung **14** (Fig. 3b) zur Aufnahme des Drehelementes verrastet. Das Ende des Rohrabschnitts **5.1** liegt dicht an der Gehäuseinnenwand **12** an. In Figur 4c ist die vordere umlaufende Lamelle **6.1** des Verschlusskolbens **6** dargestellt.

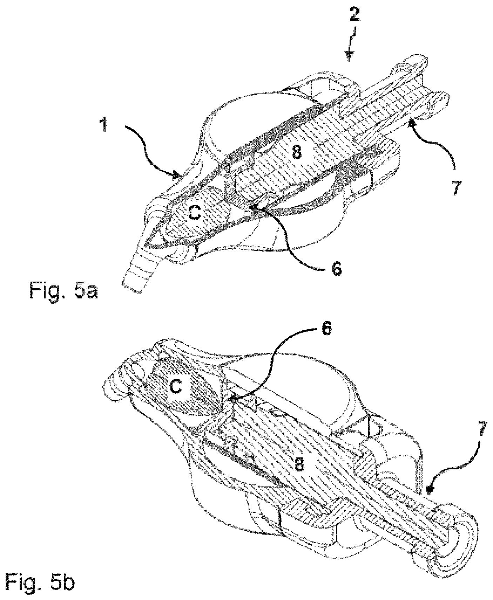

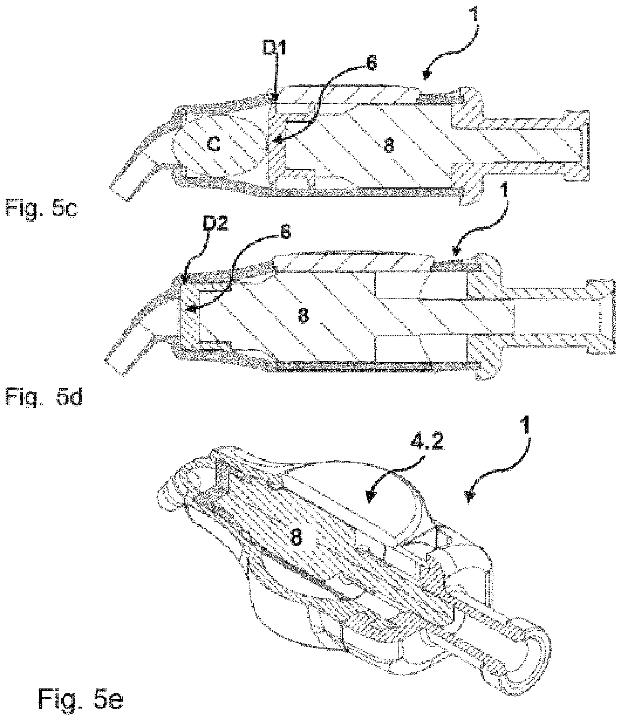

In den Figuren 5a, 5b, 5c, 5d und 5e ist die Mischkapsel **1** mit gemischter Zusammensetzung **C** in einer Schnittdarstellung dargestellt. Der Auspresskolben **8** ist in der Vertiefung **6.4** des Verschlusskolbens **6** eingesteckt und durch den ersten Mischraum **5a** bis an den zweiten Mischraum **5b** geschoben. Die Zusammensetzung **C** kann nun durch weiteres Vortreiben des Auspresskolbens **8** sowie des Verschlusskolbens **6** aus der Mischkapsel **1** appliziert werden. Der Verschlusskolben liegt in dieser Position noch mit einem Durchmesser **D1** mit abstehenden Lamellen vor, wie in Figur 5c dargestellt. Bei weiterem Vorschieben des Verschlusskolbens legen sich die Lamellen außen an den Verschlusskolben **6** an und der Durchmesser des Verschlusskolbens vermindert sich auf den Durchmesser **D2**, wie in Figur 5d und 5e dargestellt.

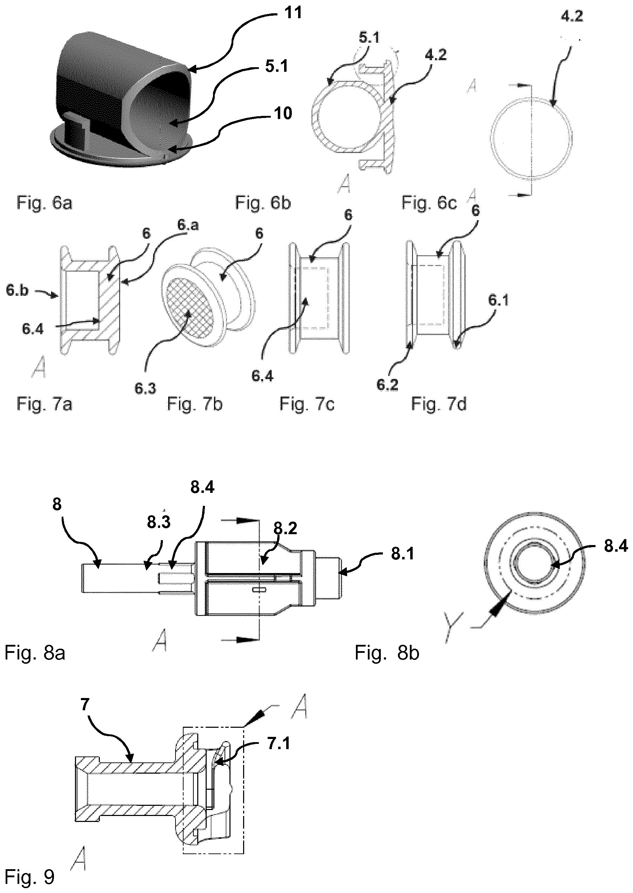

Die Figuren 6a, 6b, 6c stellen das Drehelement **4.2** mit Rohrabschnitt dar. Das Drehelement **4.2** umfasst den Rohrabschnitt **5.1**, der den ersten Mischraum **5a** bildet. Der Rohrabschnitt **5.1** oder die einseitig geschlossene zylindrische Hülse **5.1** weisen an ihren offenen Enden **10** an je zwei sich gegenüberliegenden Mantelflächen zumindest bereichsweise eine gewölbte Kontur **11** auf.

Vorzugsweise weist das Drehelement auf der äußeren Oberfläche ein zusätzliches Griffelement (nicht dargestellt) auf. Vorzugsweise zeigt das Griffelement die Stellung des ersten Mischraumes an. Wenn das Element koaxial zur Längsachse des Kapselgehäuses ausgerichtet ist, ist auch der erste Mischraum **5a** koaxial zur Längsachse des Kapselgehäuses ausgerichtet. Es wird die zweite Stellung, d.h. Misch- und/oder Austragsposition angezeigt. Ist das Griffelement senkrecht zur Längsmittelachse des Kapselgehäuses ausgerichtet wird die erste Stellung, d.h. Transport- und/oder Lagerposition, angezeigt.

In den Figuren 7a, 7b, 7c und 7d ist der Verschlusskolben **6** dargestellt, wobei Figuren 7a und 7c die Vertiefung **6.4** auf dem Mischraum abgewandten Seite **6b** zeigt. Figur 7b zeigt die Oberflächenrauheit **6.3** des Verschlusskolbens auf der dem ersten Mischraum **5a** zugewandten Seite **6a**. In Figur 7d sind die ein- oder zwei phasigen Lamellen **6.1** und **6.2** dargestellt. In den Figuren 8a, 8b und 9 sind der Auspresskolben **8**, der vorzugsweise aus PC (Polycarbonat) gefertigt sein kann, mit seinem vorderen **8.1**, mittleren **8.2** und hinteren Bereich **8.3** dargestellt, wobei in Figur 8b die Noppen, die innen am Führungsadapter **7** anliegen, in der Draufsicht dargestellt. Figur 9 zeigt ein Mittel **7.1** zum Festlegen des Führungsadapters, wie einen Bajonett-Verschluss **7.1**, am Gehäuse der Mischkapsel **2**. In den Figuren 10a und 10b sind die Widerstandsmittel **9**, die als eine teilweise Wand oder nach innen hervorstehende und in Richtung auf den Mischraum gerichtete Nase(n) ausgebildet sein können. Die Figuren 11a, 11b, 11c, 11d und 11e zeigen unterschiedliche Ausführungsformen der separaten Griffelemente **13**, die an dem Drehelement angebracht werden können oder ein Drehelement mit integralem sich in etwa senkrecht zur Oberfläche des Drehelementes erstreckendes flächiges Griffelement **13**. Figur 11d stellt dar ein Drehelement mit mittiger Öffnung **4.1** auf der Oberseite zur Aufnahme des vorderen Bereiches **8.1** des Führungskolbens mit dem die Drehbewegung ausgeführt werden kann. Nach einer Alternative weist das Drehelement **4.2** eine sechseckige Öffnung **4.1**, insbesondere eine Innen-Mehrkantöffnung, auf, in die der Auspresskolben **8** mit seinem vorderen Bereich **8.1**, der ein sechseckiges Profil aufweist, einsetzbar ist. Auf dem Drehelement in Figur 11e erstreckt sich ein etwa senkrecht abstehendes flächiges oder nach außen zulaufendes Griffelement **13**, das integral mit dem Drehelement **4.2** vorliegt oder über Vorsprünge in Vertiefungen des Drehelementes eingesteckt werden kann. Figur 11f zeigt ein Drehelement mit einer Nut **15** in die ein längliches Hilfsmittel eingreifen kann um das Drehmoment zur Durchführung der Drehbewegung des Drehelementes zu bewirken. Die Nut kann sich über den Durchmesser des Drehelementes erstrecken und quasi jede sinnvolle Profilierung, wie auch ein Hohlprofil, aufweisen in die ein Hilfsmittel eingreifen kann.

### Bezugszeichen:

- **1**: Mischkapsel
- **2**: Kapselgehäuse; **2.1** vorderes Ende; **2.2** mittlerer Bereich, **2.3** hinteres Ende des Kapselgehäuses **2, 2.4** Verschlussmittel, wie Bajonett-Verschluss
- **3**: Ausbringtülle, **3.1** Ausbringöffnung; **3.2**, **3.3** innen im Auslass; **3.2** vorderer Bereich, **3.3** hinterer Bereich in innerer Ausbringtülle **3**
- **4.1**: Öffnung im Drehelement, insbesondere mittig angeordnete Öffnung
- **4.2**: drehbar gelagertes Drehelement
- **5a**: drehbar gelagerter erster Mischraum; **5b** zweiter Mischraum; **5a+5b** gesamter Mischraum; **5.1** Rohrabschnitt, insbesondere zylindrische Hülse oder einseitig geschlossene zylindrische Hülse **5.1**
- **6**: Verschlusskolben, **6a** dem Mischraum **5a** zugewandten Seite **6a**, dem Mischraum abgewandten Seite **6b 6.1** Lamelle, an der dem Mischraum zugewandten Seite **6a, 6.2** Lamelle, an der dem Mischraum 5 abgewandten Seite **6b**,
- **6.3**: Oberflächenrauheit des Verschlusskolbens
- **6.4**: Vertiefung auf der dem Mischraum abgewandten Seite **6b**
- **7**: Führungsadapter, **7.1** Mittel zum Festlegen, wie Bajonett-Verschluss
- **8**: Auspresskolben, **8.1** vorderen Bereiches des Auspresskolbens **8**, **8.2** mittlerer Bereich, **8.3** hinterer Bereich des Auspresskolbens **8**, **8.4** Arretiermittel, wie Erhöhung
- **9**: Widerstandsmittel, teilweise Wand oder Nase(n) bzw. Zapfen
- **10**: offene(s) Ende(n) des Rohrabschnitts oder einseitig geschlossener Hülse
- **11**: Ende mit gewölbter Kontur, insbesondere Kreisabschnitte
- **12**: Gehäuseinnenwand
- **13**: separates Griffelement, das Griffelement ist verbindbar und lösbar mit dem Drehelement festlegbar
- **14**: Öffnung zur Aufnahme des Drehelementes
- **15**: Nut zur Aufnahme des Drehmomentes in Verbindung mit einem Hilfsmittel
- **D1, D2**: Durchmesser **D1** des Verschlusskolbens ist im Wesentlichen reduzierbar auf den Durchmesser **D2**
- **Y**: Drehachse des Drehelementes (**4.2**) und/oder der Mischkammer **5a**
- **Z**: Längsachse der Kapsel, **Z1** Längsachse Rohrabschnitt
- **A**: pastöse bzw. knetbare dentale Zusammensetzungen (Komponente **A**)
- **B**: pastöse bzw. knetbare dentale Zusammensetzungen (Komponente **B**)
- **C**: gemischte pastöse bzw. knetbare dentale Zusammensetzungen (Mischung der Komponenten **A** und **B**)

## Patentansprüche

1. Zwei Komponenten Mischkapsel (1) zur Aufnahme und zum Mischen von zwei Zusammensetzungen mit einem Kapselgehäuse (2), das an seinem vorderen Ende (2.1) eine Ausbringöffnung (3.1) aufweist, wobei die Mischkapsel (1) ein in dem Kapselgehäuse drehbar gelagertes oder drehbar angeordnetes Drehelement (4.2) umfasst, wobei die Drehachse (Y) des Drehelementes (4.2) in etwa senkrecht zur Längsachse (Z) der Mischkapsel (1) angeordnet ist, und wobei dem Drehelement im Kapselgehäuse ein drehbar gelagerter erster Mischraum (5a) zugeordnet ist und im Kapselgehäuse (2) ein zweiter Mischraum (5b) angeordnet ist, wobei im Kapselgehäuse (2) am hinteren Ende (2.3) ein Verschlusskolben (6) angeordnet ist, und wobei der Verschlusskolben (6) entlang der Längsachse (Z) der Mischkapsel durch den ersten Mischraum (5a) und einen zweiten Mischraum (5b) hindurchführbar ist, wenn der erste Mischraum (5a) koaxial zur Längsachse (Z) der Mischkapsel (1) ausgerichtet ist, **dadurch gekennzeichnet, dass**
die Mischkapsel ein einziges im Kapselgehäuse drehbar gelagertes oder drehbar angeordnetes Drehelement aufweist.

2. Mischkapsel nach Anspruch 1, **dadurch gekennzeichnet, dass**
das Kapselgehäuse ein einteiliges integrales Bauteil ist.

3. Mischkapsel nach Anspruch 1 oder 2, **dadurch gekennzeichnet,**
**dass** a) das Kapselgehäuse eine Öffnung (14) zur Aufnahme des Drehelementes (4.2), eine Öffnung zur Aufnahme des Verschlusskolbens und eine Ausbringöffnung aufweist, und das Kapselgehäuse ansonsten eine durchgängig geschlossene Gehäusewand aufweist, oder
b) das Kapselgehäuse der Mischkapsel weist auf der, dem in einer Öffnung (14) der Gehäusewand des Kapselgehäuses drehbar angeordneten Drehelement (4.2) gegenüberliegenden Gehäusewand des Kapselgehäuses eine durchgängig geschlossene Gehäusewand auf.

4. Mischkapsel nach einem der Ansprüche 1 bis 3, **dadurch gekennzeichnet,**
**dass** a) auf das Drehelement ein separates Griffelement (13) aufsetzbar oder in das Drehelement ein separates Griffelement (13) oder der Auspresskolben (8) einsetzbar ist, oder b) das Drehelement weist zusätzlich ein integrales Griffelement auf oder c) das Drehelement weist eine Nut auf.

5. Mischkapsel nach einem der Ansprüche 1 bis 4, **dadurch gekennzeichnet,**
**dass** an dem im Kapselgehäuse (2) drehbar gelagerten Drehelement (4.2) der erste Mischraum (5a) angeordnet ist und das drehbar gelagerte Drehelement und der erste Mischraum (5a) ein einteiliges Bauteil bilden.

6. Mischkapsel nach einem der Ansprüche 1 bis 5, **dadurch gekennzeichnet,**
**dass** an dem im Kapselgehäuse (2) drehbar gelagerten Drehelement (4.2) der erste Mischraum (5a) angeordnet ist, und das drehbar gelagerte Drehelement und der erste Mischraum (5a), der in Form eines Rohrabschnitts (5.1) oder einer einseitig geschlossenen zylindrischen Hülse (5.1) vorliegt, ein einteiliges Bauteil bilden.

7. Mischkapsel nach Anspruch 6, **dadurch gekennzeichnet,**
**dass** der mit dem drehbar gelagerten Drehelement (4.2) verbundene Rohrabschnitt (5.1) oder die einseitig geschlossene zylindrische Hülse (5.1) den ersten Mischraum (5a) bildet und sich a) im vorderen Bereich (2.1) im Kapselgehäuse (2) der zweite Mischraum (5b) befindet oder b) sich im hinteren Bereich (2.3) im Kapselgehäuse (2) der zweite Mischraum (5b) befindet.

8. Mischkapsel nach Anspruch 6 oder 7, **dadurch gekennzeichnet,**
**dass** der mit dem drehbar gelagerten Drehelement (4.2) verbundene Rohrabschnitt (5.1) den ersten Mischraum (5a) bildet und sich im vorderen Bereich (2.1) im Kapselgehäuse (2) der zweite Mischraum (5b) befindet,
wobei sich die Mischkapsel a) in einer ersten Stellung (Lagerung) befindet, wenn sich die Längsachse (Z1) des Rohrabschnitts (5.1) vorzugsweise in etwa 90° verdreht zur Längsachse (Z) des Kapselgehäuses (2) befindet, so dass der erste Mischraum (5a), und der zweite Mischraum (5b), voneinander getrennt sind, oder
wobei sich die Mischkapsel
b) in einer zweiten Stellung befindet, wenn sich die Längsachse (Z1) des Rohrabschnitts (5.1) im Wesentlichen koaxial zur Längsachse (Z) des Kapselgehäuses (2) befindet, so dass der erste Mischraum (5a) und der zweite Mischraum (5b) einen gemeinsamen Mischraum (5a+5b) bilden, oder,
wobei sich die Mischkapsel in Stellung b) in einer Ausbringstellung c) befindet, wenn ein Führungsadapter (7) mit beweglichem Auspresskolben (8) am hinteren Ende (2.3) des Kapselgehäuses (2) angeordnet ist, wobei der bewegliche Auspresskolben (8) und ein Verschlusskolben (6) durch den gemeinsamen Mischraum (5a+5b) in Richtung auf das vordere Ende (2.1) des Kapselgehäuses oder in Richtung auf den hinteren Bereich (3.3) verschiebbar sind.

9. Mischkapsel nach einem der Ansprüche 6 bis 8, **dadurch gekennzeichnet, dass** im Kapselgehäuse (2) am hinteren Ende (2.3) ein Verschlusskolben (6) angeordnet ist, wobei der Verschlusskolben (6) entlang der Längsachse (Z) der Mischkapsel durch den ersten Mischraum (5a) der in Form eines Rohrabschnitts (5.1) vorliegt und einen zweiten Mischraum (5b) hindurchführbar ist, wenn der Mischraum (5a) in Form eines Rohrabschnitts (5.1) koaxial zur Längsachse (Z) der Mischkapsel (1) ausgerichtet ist.

10. Mischkapsel nach einem der Ansprüche 1 bis 9, **dadurch gekennzeichnet, dass** der bewegliche Verschlusskolben (6) in seinem Durchmesser reduzierbar ist.

11. Mischkapsel nach einem der Ansprüche 1 bis 10, **dadurch gekennzeichnet, dass** an das hintere Ende (2.3) des Gehäuses (2) der Mischkapsel (1) ein Führungsadapter (7), in dem ein beweglicher Auspresskolben (8) angeordnet ist, anbringbar ist.

12. Mischkapsel nach einem der Ansprüche 1 bis 11, **dadurch gekennzeichnet, dass**
a) die Ausbringöffnung (3.1) an einer Ausbringtülle (3) angeordnet ist, und die Ausbringtülle integraler Bestandteil des Kapselgehäuses (2) ist oder
b) die Ausbringöffnung (3.1) eine Ausbringtülle (3) ist und an dem Kapselgehäuse (2) festlegbar ist.

13. Mischkapsel nach Anspruch 12, **dadurch gekennzeichnet, dass**
in der Ausbringtülle (3) innen im vorderen oder hinteren Bereich (3.2, 3.3) vor dem Auslass (3.1) mindestens ein Widerstandsmittel (9) angeformt ist.

14. Verfahren zum Mischen von mindestens zwei Zusammensetzungen A und B zu einer Zusammensetzung C in einer Mischkapsel nach einem der Ansprüche 1 bis 13, umfassend die Schritte
(i) Überführen der Mischkapsel aus einer a) ersten Stellung in eine b) zweite Stellung indem durch Drehen des Drehelementes (4.2) um seine Drehachse (Y) mit dem Rohrabschnitt (5.1), in dem sich der Mischraum (5a) und die Zusammensetzung B befindet, der Rohrabschnitt (5.1) in Richtung auf die Längsachse (Z) des Kapselgehäuses (2) gedreht wird, so dass der erste Mischraum (5a) umfassend die Zusammensetzung B und der zweite Mischraum (5b) im Kapselgehäuse (2) umfassend die Zusammensetzung A einen gemeinsamen Mischraum (5a+5b) bilden,
(ii) Mischen der Zusammensetzungen A und B miteinander, indem die Mischkapsel (1) bewegt wird, und
(iii) Erhalten der Zusammensetzung C.

15. Verfahren nach Anspruch 14, **dadurch gekennzeichnet, dass**
das (iv) Ausbringen der Zusammensetzung C aus der Mischkapsel erfolgt, mit den Schritten
(iv.1) Festlegen des Führungsadapters (7) mit beweglichem Auspresskolben (8) am hinteren Ende (2.3) des Kapselgehäuses (2),
(iv.2) Einschieben des Auspresskolbens (8) zusammen mit dem Verschlusskolben (6) in das Kapselgehäuse (2) der Mischkapsel (1), so dass der Verschlusskolben (6) vom Auspresskolben (8) durch den gemeinsamen Mischraum (5a+5b) geschoben wird.

16. Verfahren nach Anspruch 14 oder 15, **dadurch gekennzeichnet, dass**
sich die Mischkapsel a) in einer ersten Stellung befindet, wenn sich die Längsachse (Z1) des Rohrabschnitts (5.1) in etwa 90° verdreht zur Längsachse (Z) des Kapselgehäuses (2) befindet, so dass der erste Mischraum (5a) umfassend die Zusammensetzung (B), und der zweite Mischraum (5b) umfassend die Zusammensetzung (A), voneinander getrennt sind, oder wobei sich die Mischkapsel
b) in einer zweiten Stellung befindet, wenn sich die Längsachse (Z1) des Rohrabschnitts (5.1) koaxial zur Längsachse des Kapselgehäuses (2) befindet, so dass der erste Mischraum (5a) und der zweite Mischraum (5b) einen gemeinsamen Mischraum (5a+5b) bilden umfassend die Zusammensetzungen (A und B), oder,
wobei sich die Mischkapsel in Stellung b) auch in einer Ausbringstellung c) befindet, wenn der Führungsadapter (7) mit beweglichem Auspresskolben (8) am hinteren Ende (2.3) des Kapselgehäuses (2) angeordnet ist, wobei der bewegliche Auspresskolben (8) und der Verschlusskolben (6) durch den gemeinsamen Mischraum (5a+5b) in Richtung auf die Ausbringöffnung (3.1) verschiebbar sind.

17. Verwendung einer Mischkapsel mit einem Kapselgehäuse nach einem der Ansprüche 1 bis 13, wobei das Kapselgehäuse eine Öffnung zur Aufnahme eines Drehelementes, eine im hinteren Bereich gelegenen Öffnung zur Aufnahme eines Verschlusskolbens und eine im vorderen Bereich gelegene Ausbringöffnung (3.1) aufweist, wobei in der Öffnung (4.1) zur Aufnahme des Drehelementes (4.2) das Drehelement (4.2) umfassend den ersten Mischraum (5a) angeordnet ist, wobei in der im hinteren Ende (2.3) gelegenen Öffnung der Verschlusskolben (6) angeordnet ist,
wobei in der Mischkapsel die erste Mischkammer (5a) durch Drehen um die Drehachse (Y) des Drehelementes (4.2), wobei die Drehachse (Y) in etwa senkrecht zur Längsmittelachse (Z) des Kapselgehäuses (2) der Mischkapsel (1) angeordnet ist, in eine erste Stellung zur Lagerung und in eine zweite Stellung zum Mischen und Applizieren drehbar ist, wobei in der zweiten Stellung die erste Mischkammer (5a) mit einer zweiten Mischkammer (5b) eine gemeinsame Mischkammer (5a+5b) bilden.

## Claims

1. Two-component mixing capsule (1) for intake and for mixing of two compositions with a capsule housing (2) having a discharge opening (3.1) at its front end (2.1), the mixing capsule (1) comprising a rotary element (4.2) rotatably mounted or rotatably arranged in the capsule housing, the rotational axis (Y) of the rotary element (4.2) being approximately perpendicularly arranged to the longitudinal axis (Z) of the mixing capsule (1), and a rotatably mounted first mixing chamber (5a) being assigned to the rotary element in the capsule housing, and a second mixing chamber (5b) being arranged in the capsule housing (2), a sealing piston (6) being arranged in the capsule housing (2) at the back end (2.3), and the sealing piston (6) being passable through the first mixing chamber (5a) and a second mixing chamber (5b) along the longitudinal axis (Z) of the mixing capsule when the mixing chamber (5a) is coaxially oriented with the longitudinal axis (Z) of the mixing capsule (1),
**characterised in that**
the mixing capsule comprises a single rotary element rotatably mounted or rotatably arranged in the capsule housing.

2. Mixing capsule according to claim 1, **characterised in that**
the capsule housing is a one-piece integral component.

3. Mixing capsule according to claim 1 or 2, **characterised in that**
a) the capsule housing has an opening (14) to receive the rotary element (4.2), an opening to receive the sealing piston and a discharge opening, and the capsule housing otherwise has a continuously closed housing wall, or
b) the capsule housing of the mixing capsule has a continuously closed housing wall on the housing wall of the capsule housing opposite to the rotary element (4.2) rotatably arranged in an opening (14) of the housing wall of the capsule housing.

4. Mixing capsule according to any one of claims 1 to 3, **characterised in that**
a) a separate handhold element (13) is attachable to the rotary element or a separate handhold element (13) or the squeezing piston (8) is insertable into the rotary element, or b) the rotary element additionally has an integral handhold element, or c) the rotary element has a groove.

5. Mixing capsule according to any one of claims 1 to 4, **characterised in that** the first mixing chamber (5a) is arranged at the rotary element (4.2) rotatably mounted in the capsule housing (2), and the rotatably mounted rotary element and the first mixing chamber (5a) form a one-piece component.

6. Mixing capsule according to any one of claims 1 to 5, **characterised in that** the first mixing chamber (5a) is arranged at the rotary element (4.2) rotatably mounted in the capsule housing (2), and the rotatably mounted rotary element and the first mixing chamber (5a), being in the form of a pipe section (5.1) or of a one-side closed cylindrical sleeve (5.1), form a one-piece component.

7. Mixing capsule according to claim 6, **characterised in that** the pipe section (5.1) connected to the rotatably mounted rotary element (4.2) or the cylindrical one-side closed sleeve (5.1) forms the first mixing chamber (5a) and a) the second mixing chamber (5b) is located in the front region (2.1) in the capsule housing (2) or b) the second mixing chamber (5b) is located in the back region (2.3) in the capsule housing (2).

8. Mixing capsule according to claim 6 or 7, **characterised in that**
the pipe section (5.1) connected to the rotatably mounted rotary element (4.2) forms the first mixing chamber (5a) and the second mixing chamber (5b) is located in the front region (2.1) in the capsule housing (2),
the mixing capsule being a) in a first position (storage) when the longitudinal axis (Z1) of the pipe section (5.1) is preferably twisted by approximately 90° to the longitudinal axis (Z) of the capsule housing (2), so that the first mixing chamber (5a) and the second mixing chamber (5b) are separated from each other, or
the mixing capsule being
b) in a second position when the longitudinal axis (Z1) of the pipe section (5.1) is substantially coaxial with the longitudinal axis (Z) of the capsule housing (2), so that the first mixing chamber (5a) and the second mixing chamber (5b) form a common mixing chamber (5a+5b), or,
the mixing capsule in position b) being in a discharge position c) when a guiding adapter (7) with movable squeezing piston (8) is arranged at the back end (2.3) of the capsule housing (2), the movable squeezing piston (8) and a sealing piston (6) being displaceable through the common mixing chamber (5a+5b) in the direction towards the front end (2.1) of the capsule housing or in the direction towards the back region (3.3).

9. Mixing capsule according to any one of claims 6 to 8, **characterised in that** a sealing piston (6) is arranged in the capsule housing (2) at the back end (2.3), the sealing piston (6) being passable along the longitudinal axis (Z) of the mixing capsule through the first mixing chamber (5a) being in the form of a pipe section (5.1) and a second mixing chamber (5b) when the mixing chamber (5a) in the form of a pipe section (5.1) is coaxially oriented with the longitudinal axis (Z) of the mixing capsule (1).

10. Mixing capsule according to any one of claims 1 to 9, **characterised in that** the diameter of the movable sealing piston (6) is reducible.

11. Mixing capsule according to any one of claims 1 to 10, **characterised in that** a guiding adapter (7), in which a movable squeezing piston (8) is arranged, is attachable to the back end (2.3) of the housing (2) of the mixing capsule (1).

12. Mixing capsule according to any one of claims 1 to 11, **characterised in that**
a) the discharge opening (3.1) is arranged at a discharge spout (3), and the discharge spout is an integral part of the capsule housing (2), or
b) the discharge opening (3.1) is a discharge spout (3) and is fastenable to the capsule housing (2).

13. Mixing capsule according to claim 12, **characterised in that**
at least one resistance means (9) is integrally formed inside the discharge spout (3) in the front or back region (3.2, 3.3) in front of the discharge opening (3.1).

14. Method for mixing at least two compositions A and B into a composition C in a mixing capsule according to any one of claims 1 to 13, comprising the steps of
(i) transferring the mixing capsule from a) a first position into b) a second position by the pipe section (5.1) being rotated in the direction towards the longitudinal axis (Z) of the capsule housing (2), by rotating the rotary element (4.2) with the pipe section (5.1), in which the mixing chamber (5a) and composition B are located, about its rotational axis (Y), so that the first mixing chamber (5a) comprising composition B and the second mixing chamber (5b) in the capsule housing (2) comprising composition A form a common mixing chamber (5a+5b),
(ii) mixing compositions A and B with each other, by the mixing capsule (1) being moved, and
(iii) obtaining composition C.

15. Method according to claim 14, **characterised in that**
(iv) discharging of composition C from the mixing capsule is made, with the steps of
(iv.1) fastening the guiding adapter (7) with movable squeezing piston (8) at the back end (2.3) of the capsule housing (2),
(iv.2) pushing the squeezing piston (8) into the capsule housing (2) of the mixing capsule (1) along with the sealing piston (6), so that the sealing piston (6) is pushed through the common mixing chamber (5a+5b) by the squeezing piston (8).

16. Method according to claim 14 or 15, **characterised in that**
the mixing capsule a) is in a first position when the longitudinal axis (Z1) of the pipe section (5.1) is twisted by approximately 90° to the longitudinal axis (Z) of the capsule housing (2), so that the first mixing chamber (5a) comprising composition (B) and the second mixing chamber (5b) comprising composition (A) are separated from each other, or the mixing capsule being
b) in a second position when the longitudinal axis (Z1) of the pipe section (5.1) is coaxial with the longitudinal axis of the capsule housing (2), so that the first mixing chamber (5a) and the second mixing chamber (5b) form a common mixing chamber (5a+5b) comprising compositions (A and B), or,
the mixing capsule in position b) being also in a discharge position c) when the guiding adapter (7) with movable squeezing piston (8) is arranged at the back end (2.3) of the capsule housing (2), the movable squeezing piston (8) and the sealing piston (6) being displaceable through the common mixing chamber (5a+5b) in the direction towards the discharge opening (3.1).

17. Use of a mixing capsule with a capsule housing according to any one of claims 1 to 13, wherein the capsule housing has an opening to receive a rotary element, an opening located in the back region to receive a sealing piston and a discharge opening (3.1) located in the front region, the rotary element (4.2) comprising the first mixing chamber (5a) being arranged in the opening (4.1) to receive the rotary element (4.2), the sealing piston (6) being arranged in the opening located in the back end (2.3), the first mixing chamber (5a) being rotatable in a first position for storing and in a second position for mixing and applying, by rotating about the rotational axis (Y) of the rotary element (4.2), the rotational axis (Y) being approximately perpendicularly arranged to the longitudinal central axis (Z) of the capsule housing (2) of the mixing capsule (1), the first mixing chamber (5a) with a second mixing chamber (5b) forming a common mixing chamber (5a+5b) in the second position.

## Revendications

1. Capsule de mélange à deux composants (1) pour la réception et pour le mélange de deux compositions avec un boîtier de capsule (2) ayant une ouverture de décharge (3.1) à son extrémité avant (2.1), la capsule de mélange (1) comprenant un élément rotatif (4.2) monté rotativement ou arrangé rotativement dans le boîtier de capsule, l'axe de rotation (Y) de l'élément rotatif (4.2) étant arrangé approximativement perpendiculairement à l'axe longitudinal (Z) de la capsule de mélange (1), et une première chambre de mélange (5a) montée rotativement étant assignée à l'élément rotatif dans le boîtier de capsule (2), et une deuxième chambre de mélange (5b) étant arrangée dans le boîtier de capsule (2), un piston d'étanchéité (6) étant arrangé dans le boîtier de capsule (2) à l'extrémité arrière (2.3), et le piston d'étanchéité (6) étant passable au travers de la première chambre de mélange (5a) et une deuxième chambre de mélange (5b) le long de l'axe longitudinal (Z) de la capsule de mélange lorsque la chambre de mélange (5a) est orienté coaxialement à l'axe longitudinal (Z) de la capsule de mélange (1),
**caractérisée en ce que**
la capsule de mélange a un seul élément rotatif monté rotativement ou arrangé rotativement dans le boîtier de capsule.

2. Capsule de mélange selon la revendication 1, **caractérisé en ce que** le boîtier de capsule est un composant intégral monobloc.

3. Capsule de mélange selon l'une des revendications 1 ou 2, **caractérisée en ce que**
a) le boîtier de capsule a une ouverture (14) pour recevoir l'élément rotatif (4.2), une ouverture pour recevoir le piston d'étanchéité et une ouverture de décharge, et le boîtier de capsule a sinon une paroi de boîtier fermée continûment, ou
b) le boîtier de capsule de la capsule de mélange a une paroi de boîtier fermée continûment sur la paroi de boîtier du boîtier de capsule étant à l'opposé de l'élément rotatif (4.2) arrangé rotativement dans une ouverture (14) de la paroi de boîtier du boîtier de capsule.

4. Capsule de mélange selon l'une des revendications 1 à 3, **caractérisée en ce que** a) un élément de poignée (13) séparé est attachable à l'élément rotatif ou un élément de poignée (13) séparé ou le piston de pressurage (8) est insertable dans l'élément rotatif, ou b) l'élément rotatif a additionnellement un élément de poignée intégral, ou c) l'élément rotatif a une rainure.

5. Capsule de mélange selon l'une des revendications 1 à 4, **caractérisée en ce que** la première chambre de mélange (5a) est arrangée à l'élément rotatif (4.2) monté rotativement dans le boîtier de capsule (2), et l'élément rotatif monté rotativement et la première chambre de mélange (5a) forment un composant monobloc.

6. Capsule de mélange selon l'une des revendications 1 à 5, **caractérisée en ce que** la première chambre de mélange (5a) est arrangée à l'élément rotatif (4.2) monté rotativement dans le boîtier de capsule (2), et l'élément rotatif monté rotativement et la première chambre de mélange (5a), étant sous forme d'une section de tuyau (5.1) ou d'une douille cylindrique (5.1) fermée d'un côté, forment un composant monobloc.

7. Capsule de mélange selon la revendication 6, **caractérisée en ce que** la section de tuyau (5.1) connectée à l'élément rotative (4.2) monté rotativement ou la douille cylindrique (5.1) fermée d'un côté forme la première chambre de mélange (5a) et a) la deuxième chambre de mélange (5b) est située dans la région avant (2.1) dans le boîtier de capsule (2) ou b) la deuxième chambre de mélange (5b) est située dans la région arrière (2.3) dans le boîtier de capsule (2).

8. Capsule de mélange selon la revendication 6 ou 7, **caractérisée en ce que**
la section de tuyau (5.1) connectée à l'élément rotative (4.2) monté rotativement forme la première chambre de mélange (5a) et la deuxième chambre de mélange (5b) est située dans la région avant (2.1) dans le boîtier de capsule (2),
la capsule de mélange étant a) dans une première position (stockage) lorsque l'axe longitudinal (Z1) de la section de tuyau (5.1) est de préférence tordu par environ 90° à l'axe longitudinal (Z) du boîtier de capsule (2), de sorte que la première chambre de mélange (5a) et la deuxième chambre de mélange (5b) sont séparées l'une de l'autre, ou
la capsule de mélange étant
b) dans une deuxième position lorsque l'axe longitudinal (Z1) de la section de tuyau (5.1) est essentiellement coaxial à l'axe longitudinal (Z) du boîtier de capsule (2), de sorte que la première chambre de mélange (5a) et la deuxième chambre de mélange (5b) forment une chambre de mélange commune (5a+5b), ou,
la capsule de mélange dans position b) étant dans une position de décharge c) lorsqu'une adapteur guidant (7) avec un piston de pressurage (8) mobile est arrangé à l'extrémité arrière (2.3) du boîtier de capsule (2), le piston de pressurage (8) mobile et le piston d'étanchéité (6) étant déplaçable au travers de la chambre de mélange commune (5a+5b) dans la direction vers l'extrémité avant (2.1) du boîtier de capsule ou dans la direction vers la région arrière (3.3).

9. Capsule de mélange selon l'une des revendications 6 à 8, **caractérisée en ce que** un piston d'étanchéité (6) est arrangé dans le boîtier de capsule (2) à l'extrémité arrière (2.3), le piston d'étanchéité (6) étant passable le long de l'axe longitudinal (Z) de la capsule de mélange au travers de la première chambre de mélange (5a) étant sous la forme d'une section de tuyau (5.1) et une deuxième chambre de mélange (5b) lorsque la chambre de mélange (5a) sous la forme d'une section de tuyau (5.1) est orienté coaxialement à l'axe longitudinal (Z) de la capsule de mélange (1).

10. Capsule de mélange selon l'une des revendications 1 à 9, **caractérisée en ce que** le diamètre du piston d'étanchéité (6) mobile est réductible.

11. Capsule de mélange selon l'une des revendications 1 à 10, **caractérisée en ce qu'**un adapteur guidant (7), dans lequel un piston de pressurage (8) mobile est arrangé, est attachable à l'extrémité arrière (2.3) du boîtier (2) de la capsule de mélange (1).

12. Capsule de mélange selon l'une des revendications 1 à 11, **caractérisée en ce que**
a) l'ouverture de décharge (3.1) est arrangée à une goulotte de décharge (3), et la goulotte de décharge est une partie intégrale du boîtier de capsule (2), ou
b) l'ouverture de décharge (3.1) est une goulotte de décharge (3) et est fixable au boîtier de capsule (2).

13. Capsule de mélange selon la revendication 12, **caractérisée en ce que** au moins un moyen de résistance (9) est formé de façon intégrale dedans la goulotte de décharge (3) dans la région avant ou arrière (3.2, 3.3) devant l'ouverture de décharge (3.1).

14. Procédé pour mélanger au moins deux compositions A et B en une composition C dans une capsule de mélange selon l'une des revendications 1 à 13, comprenant les étapes de
(i) transférer la capsule de mélange de a) une première position en b) une deuxième position par la section de tuyau (5.1) étant tournée dans la direction vers l'axe longitudinal (Z) de boîtier de capsule (2), par tourner l'élément rotatif (4.2) avec la section de tuyau (5.1), dans laquelle la chambre de mélange (5a) et la composition B sont situées, autour son axe de rotation (Y), de sorte que la première chambre de mélange (5a) comprenant la composition B et la deuxième chambre de mélange (5b) dans le boîtier de capsule (2) comprenant la composition A forment une chambre de mélange commune (5a+5b),
(ii) mélanger les compositions A et B l'une avec l'autre, par le capsule de mélange (1) étant mouvementée, et
(iii) obtenir la composition C.

15. Procédé selon la revendication 14, **caractérisée en ce que**
(iv) le déchargement de la composition C de la capsule de mélange est effectué, avec les étapes de
(iv.1) fixer l'adapteur guidant (7) avec le piston de pressurage (8) mobile à l'extrémité arrière (2.3) du boîtier de capsule (2),
(iv.2) pousser le piston de pressurage (8) dans le boîtier de capsule (2) de la capsule de mélange (1) avec le piston d'étanchéité (6), de sorte que le piston d'étanchéité (6) est poussé au travers de la chambre de mélange commune (5a+5b) par le piston de pressurage (8).

16. Procédé selon la revendication 14 ou 15, **caractérisé en ce que**
la capsule de mélange a) est dans une première position lorsque l'axe longitudinal (Z1) de la section de tuyau (5.1) est tordu par environ 90° à l'axe longitudinal (Z) du boîtier de capsule (2), de sorte que la première chambre de mélange (5a) comprenant la composition (B) est la deuxième chambre de mélange (5b) comprenant la composition (A) sont séparées l'une de l'autre, ou la capsule de mélange étant b) dans une deuxième position lorsque l'axe longitudinal (Z1) de la section de tuyau (5.1) est coaxial à l'axe longitudinal du boîtier de capsule (2), de sorte que la première chambre de mélange (5a) et la deuxième chambre de mélange (5b) forment une chambre de mélange commune (5a+5b) comprenant les compositions (A et B), ou,
la capsule de mélange dans position b) étant aussi dans une position de décharge c) lorsqu'une adapteur guidant (7) avec un piston de pressurage (8) mobile est arrangé à l'extrémité arrière (2.3) du boîtier de capsule (2), le piston de pressurage (8) mobile et le piston d'étanchéité (6) étant déplaçable au travers de la chambre de mélange commune (5a+5b) dans la direction vers l'ouverture de décharge (3.1).

17. Utilisation d'une capsule de mélange avec un boîtier de capsule selon l'une des revendications 1 à 13, selon laquelle le boîtier de capsule à une ouverture pour recevoir un élément rotatif, une ouverture située dans la région arrière pour recevoir un piston d'étanchéité et une ouverture de décharge (3.1) située dans la région avant, l'élément rotatif (4.2) comprenant la première chambre de mélange (5a) étant arrangée dans l'ouverture (4.1) pour recevoir l'élément rotatif (4.2), le piston d'étanchéité (6) étant arrangé dans l'ouverture située dans l'extrémité arrière (2.3),
la première chambre de mélange (5a) étant rotative dans une première position pour le stockage est dans une deuxième position pour le mélange et l'application, par tournant autour de l'Axe de rotation (Y) de l'élément rotatif (4.2), l'axe de rotation étant arrangé approximativement perpendiculairement à l'axe central longitudinal (Z) du boîtier de capsule (2) de la capsule de mélange (1), la première chambre de mélange (5a) avec une deuxième chambre de mélange (5b) forment une chambre de mélange commune (5a+5b) dans la deuxième position.
